(19) **Europäisches Patentamt**
**European Patent Office**
**Office européen des brevets**

(11) **EP 3 629 342 B1**

(12) **EUROPEAN PATENT SPECIFICATION**

(45) Date of publication and mention
of the grant of the patent:
**09.06.2021  Bulletin 2021/23**

(51) Int Cl.:
***G21G 1/06*** *(2006.01)*

(21) Application number: **19201637.6**

(22) Date of filing: **06.08.2015**

(54) **HIGH EFFICIENCY NEUTRON CAPTURE PRODUCTS PRODUCTION**

HERSTELLUNG VON HOCHEFFIZIENTEN NEUTRONENEINFANGPRODUKTEN

FABRICATION DE PRODUITS DE CAPTURE DE NEUTRONS HAUTE EFFICACITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.08.2014  US 201462033691 P**

(43) Date of publication of application:
**01.04.2020  Bulletin 2020/14**

(62) Document number(s) of the earlier application(s) in accordance with Art. 76 EPC:
**15830288.5 / 3 177 912**

(73) Proprietor: **Research Triangle Institute**
**Research Triangle Park, NC 27709 (US)**

(72) Inventor: **BALDASARO, Nicholas Guy**
**Cary, NC 27518 (US)**

(74) Representative: **Murgitroyd & Company**
**Murgitroyd House**
**165-169 Scotland Street**
**Glasgow G5 8PL (GB)**

(56) References cited:
**EP-A1- 0 990 238       GB-A- 2 487 198**
**US-A1- 2011 268 237    US-A1- 2012 275 557**
**US-A1- 2013 336 437**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**CROSS-REFERENCE TO RELATED APPLICATION**

This application claims the benefit of priority of U.S. provisional patent application no. 62/033,691, titled "HIGH EFFICIENCY NEUTRON CAPTURE PRODUCT PRODUCTION," filed on August 6, 2014.

**TECHNICAL FIELD**

The present disclosure relates to neutron capture and to neutron efficient reaction assemblies and methods. More particularly, this disclosure relates to producing a nuclear material, such as a nuclear imaging material, through neutron capture by a reactant nuclear material.

**BACKGROUND**

In nuclear medicine, radioactive substances are used in diagnostic and therapeutic medical procedures. Elemental radionuclides are often combined with other elements to form chemical compounds, or combined with existing pharmaceutical compounds to form radiopharmaceuticals. These radiopharmaceuticals, once administered to a patient, can localize to specific organs or cellular receptors. This property of radiopharmaceuticals allows the imaging of the extent of a disease process in the body, based on cellular function and physiology, rather than relying on physical changes in tissue anatomy. Additionally, in some diseases, procedures in nuclear medicine can identify medical problems at an earlier stage than other diagnostic tests.

An important aspect of nuclear medicine is the use of radioactive tracers. A radioactive tracer (also known as a radioactive label) is a substance containing a radioisotope (RI) that is used to measure the speed of a biochemical processes and to track the movement of a substance through a natural system such as a cell or tissue. An important radioactive tracer is technetium-99m (symbolically represented as $^{99m}Tc$), which can be readily detected in the body by medical imaging equipment.

$^{99m}Tc$ is a metastable nuclear isomer of technetium-99. The "m" indicates that this is a metastable nuclear isomer, the half-life of which is 6 hours. This is considerably longer (by many orders of magnitude) than most nuclear isomers that undergo gamma decay. Thus, the half-life of $^{99m}Tc$ is very long in terms of average de-excitation, yet short in comparison with many commonly observed radioactive decay half-lives, and in comparison with radionuclides used in many kinds of nuclear medicine tests.

$^{99m}Tc$ is used in radioactive isotope medical applications. It is a radioactive tracer that can be detected within the human body by medical imaging equipment. It is well suited to this role because it emits readily detectable photons at energies convenient for medical imaging. Additionally, $^{99m}Tc$ also dissolves in aqua regia, nitric acid, and concentrated sulfuric acid, but is not soluble in hydrochloric acid of any strength. Radiopharmaceuticals based on $^{99m}Tc$ are used for imaging and functional studies of the brain, bone, myocardium, thyroid, lungs, liver, gallbladder, kidneys, skeleton, blood, and tumors.

$^{99m}Tc$ is used in about 20 million diagnostic nuclear medical procedures every year. Approximately 85 percent of diagnostic imaging procedures in nuclear medicine use this isotope. Depending on the type of nuclear medicine procedure, the $^{99m}Tc$ is tagged or bound to a pharmaceutical that transports the $^{99m}Tc$ to an intended location.

An important advantage of $^{99m}Tc$ is that, due to its half-life of 6.0058 hours for gamma emission, 93.7 percent of $^{99m}Tc$ decays to technetium-99 in 24 hours. Thus, the short half-life of the metastable nuclear isomer, in terms of human-activity and metabolism, allows for scanning procedures that collect data rapidly but keep total patient radiation exposure low. The resulting technetium-99 ground state, which has a half-life of 211,000 years decaying to stable ruthenium-99, emits soft beta particles (electrons of nuclear origin) without causing significant gamma-ray exposure. All of these characteristics ensure that the use of $^{99m}Tc$ represents minimal radiation burden on the body, providing significant medical imaging benefits.

Due to its short half-life, the $^{99m}Tc$ used in nuclear medicine is typically extracted from $^{99m}Tc$ generators containing molybdenum-99 ($^{99}Mo$), which has a half-life of 2.75 days and is the usual parent nuclide for $^{99m}Tc$. Unfortunately, a significant amount of $^{99}Mo$ produced for $^{99m}Tc$ medical use comes from the fission of highly enriched uranium from only five reactors around the world: NRU in Canada; BR2 in Belgium; SAFARI-1 in South Africa; HFR (Petten) in the Netherlands; and the OSIRIS reactor in Saclay, France.

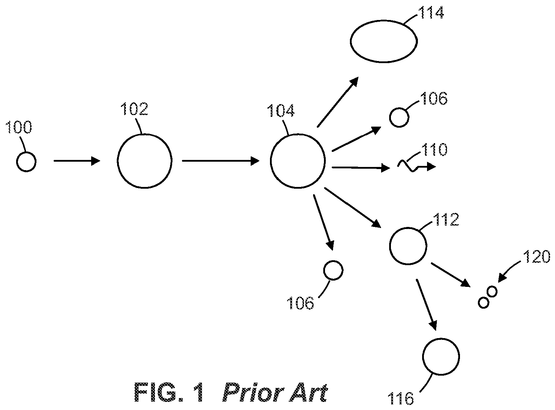

A known induced single fission incident is diagrammatically represented in FIG. 1. A neutron 100 collides with a uranium-23 5 ($^{235}U$) nucleus 102, which absorbs the neutron 100 as represented by the uranium-236 nucleus 104 undergoing fission and producing neutrons 106, gamma radiation 110, a $^{99}Mo$ nucleus 112 (roughly 6% of the time), and other fission products 114. The $^{99}Mo$ nucleus 112 decays to produce a $^{99m}Tc$ nucleus 116, and other radiations 120 including a beta particle (an electron of nuclear origin) and antineutrinos 118.

A small amount of $^{99}$Mo is also produced from low-enriched uranium at the new OPAL reactor in Australia, as well as a few other sites in the world. An even smaller amount of $^{99}$Mo is produced by neutron activation of molybdenum-98 using an accelerator-based method of neutron production. More commonly, a uranium target with highly enriched $^{235}$U (up to 90 percent $^{235}$U) or low enriched uranium (less than 20 percent $^{235}$U) is irradiated with neutrons to form $^{99}$Mo as a fission product, which is then separated from other fission products in a hot cell.

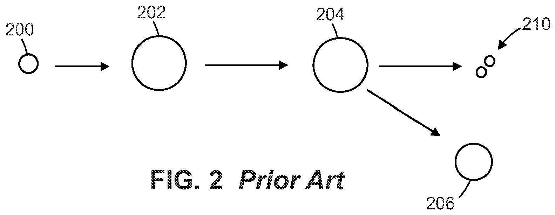

A neutron activation process is shown in FIG. 2. In FIG. 2, a neutron 200 collides with a nucleus 202 of $^{98}$Mo that absorbs the neutron 200 and produces a nucleus 204 of $^{99}$Mo. The $^{99}$Mo nucleus 204 then decays to produce a nucleus 206 of $^{99m}$Tc and other radiations 210 including an electron (beta radiation) and antineutrinos. The neutron generator may be a deuterium/tritium accelerator ("D-T accelerator") or may operate by using an alternate neutron producing nuclear reaction, for example, spallation.

Unfortunately, current accelerator-based methods of neutron production tend to create $^{99}$Mo and $^{99m}$Tc uneconomically or at low neutron efficiency, with no more than a few particles of $^{99}$Mo created for every 1000 neutrons produced. Additionally, for political and safety reasons, two aging nuclear reactors (NRU and HFR) have shut down repeatedly for extended maintenance periods. These two reactors produce a large proportion of the world supply of $^{99}$Mo. The resulting global shortages of $^{99m}$Tc have suggested the need for additional production capability.

Patent publications US 2013/336437 A1 and EP 0 990 238 A1 Provide information that is useful for the understanding the background of the invention.

Therefore, there is a need for systems and methods for using a neutron source to produce isotopes or radioisotopes (such as $^{99m}$Tc) at a high efficiency so as to obviate the need for current nuclear reactor production schemes. More generally, a scheme for making most isotopes without the use of nuclear reactors or subcritical assemblies is needed.

## SUMMARY

This summary is provided to introduce in a simplified form concepts that are further described in the following detailed descriptions. This summary is not intended to identify key features or essential features of the claimed subject matter, nor is it to be construed as limiting the scope of the claimed subject matter.

The present invention discloses an apparatus for producing reaction-product nuclei from reactant nuclei and includes a plurality of reactant nuclei and a plurality of reactant nuclei as well as a method for producing decay-product nuclei from a reactant isotope using a neutron source according to the appended claims..

In at least one example, the rate of reactant nuclei neutron capture divided by the rate of neutron source production is greater than approximately 5%.

According to the invention, temperature control capable of maintaining at least 2 different regions of the apparatus at different temperatures is used, and at least one region is cooled to a temperature below 250 degrees Kelvin. The temperature control may include the use of a cryogenic fluid.

In at least one example, at least one neutron reflector at least partially surrounds the pluralities of reactant nuclei and moderating nuclei. The reflector includes moderating nuclei. The reflector thickness is greater than approximately 20 centimeters, and in may be principle be limitlessly thick, although in practice, an economically designed reflector can be less than approximately 15 meters in thickness, and more preferably less than 3 meters in thickness. Within the description of this disclosure, reflectors will be described as between 20 centimeters and 15 meters, with the understanding that thicker reflectors are possible.

In at least one example, both an outer and an inner neutron reflector reflect neutrons towards regions containing higher densities of reactant nuclei. In some embodiments, at least one reflector will cause backscattering of neutrons in a single collision, while in other embodiments, several collisions are necessary to cause a full or nearly full reversal in the direction of a neutron's motion.

In at least one example, the pluralities are arranged in one or more approximately parallel layers, at least one layer being distinct from another layer on the basis of elemental composition, concentration of chemical species, density or temperature.

In at least one example, a target is configured to emit neutrons when impacted by accelerated particles. The target includes atoms chosen from a group consisting of deuterium, tritium, helium-4, lithium-7, beryllium, boron-11, carbon, nitrogen-15, oxygen, fluorine, neon-20, neon-22, tantalum, tungsten, lead, mercury, thallium, thorium, uranium, neptunium and other transuranics. The accelerated particles enter the system via an access channel configured to accept greater than 50 percent of the accelerated particles that impinge upon the access channel. The access channel here is any effective path for the particle of interest to enter the apparatus and impinge upon a target.

According to at least one embodiment, an apparatus for producing reaction-product nuclei from reactant nuclei includes a plurality of reactant nuclei having a first average microscopic thermal neutron capture cross-section and a plurality of moderating nuclei. For the purposes of this disclosure, average in this context means the weighted average of all nuclei of interest; for example, the average microscopic cross-section of 10 light water molecules and 2 aluminum atoms would be approximately the sum of 10∗2∗(hydrogen-1 cross-section) +10∗1∗(oxygen-16 cross-section) +2∗1∗(aluminum-27 cross-section), collectively divided by (20+ 10 +2). Hereby defined is a collection of isotopes consisting of those isotopes whose nuclei species capture at least 1% of all emitted neutrons from the neutron source and which are not reactant nuclei. Also defined is a second plurality of nuclei consisting of all nuclei from the collection of isotopes, wherein at least approximately 90% of the nuclei have microscopic thermal neutron capture cross-sections that are lower than the microscopic thermal neutron capture cross-section of any of the reactant nuclei. For the purposes of this disclosure, nuclei species in this context means the nuclei of a particular isotope, such as hydrogen-2, oxygen-16, etc.

For the purpose of interpreting, the "collection of isotopes consisting of those isotopes whose nuclei species capture at least 1% of all emitted neutrons from the neutron source..." should be understood to imply "for the neutron source configuration being utilized." There may be many ways to configure a neutron source so as to alter the isotopes within the collection of isotopes, but the particular configuration being used to produce reaction-product nuclei is the configuration to which the claims apply.

The total mass of moderating nuclei is greater than approximately 1 kilogram. A neutron source that is neither a nuclear reactor nor a subcritical assembly is in proximity to the reactant nuclei sufficient to produce reaction-product nuclei by neutron capture.

In at least one example, the reactant nuclei comprise molybdenum-98, and the rate of reactant nuclei neutron capture divided by the rate of the neutron source's neutron production is greater than approximately 1%.

In at least one example, the reactant nuclei comprise molybdenum-98, and the rate of reactant nuclei neutron capture divided by the rate of neutron source production is greater than approximately 5%.

In at least one example, the apparatus includes molybdenum-99 reaction-product nuclei and technetium-99m decay-product nuclei.

In at least one example, the moderating nuclei comprise nuclei of atoms that are chosen from a group consisting of deuterium, tritium, helium-4, lithium-7, beryllium, boron-11, carbon, nitrogen-15, oxygen, fluorine, neon-20 and neon-22.

According to the invention, temperature control is used to maintain at least two different regions of the apparatus at different temperatures, and least one region is cooled to a temperature below approximately 250 degrees Kelvin. The temperature control may include the use of a cryogenic fluid. At least one neutron reflector may at least partially surround the pluralities of reactant nuclei and moderating nuclei, the reflector including moderating nuclei and having a thickness that is greater than approximately 20 centimeters and less than approximately 15 meters. The apparatus may include both an outer and an inner neutron reflector that reflect neutrons towards regions of the pluralities containing higher densities of reactant nuclei.

In at least one example, a target is configured to emit neutrons when impacted by accelerated particles, and the target includes atoms chosen from a group consisting of deuterium, tritium, helium-4, lithium-7, beryllium, boron-11, carbon, nitrogen-15, oxygen, fluorine, neon-20, neon-22, tantalum, tungsten, lead, mercury, thallium, thorium, uranium, neptunium and other transuranics. The accelerated particles enter the system via an access channel configured to accept greater than 50 percent of the accelerated particles that impinge upon the access channel.

According to the invention, a method for producing decay-product nuclei from a reactant isotope using a neutron source includes preparing a plurality of reactant nuclei having a first average microscopic thermal neutron capture cross-section and a plurality of moderating nuclei. Hereby defined is a collection of isotopes consisting of those isotopes whose nuclei species capture at least 1% of all emitted neutrons from the neutron source and which are not reactant nuclei. Also defined is a second plurality of nuclei consisting of all nuclei from the collection of isotopes, wherein at least approximately 90% of the nuclei have microscopic thermal neutron capture cross-sections that are lower than the microscopic thermal neutron capture cross-section of any of the reactant nuclei. The total mass of moderating nuclei is greater than approximately 1 kilogram. The method includes generating neutrons and irradiating the plurality with the neutrons such that a reaction product is generated when the neutrons are captured by the reactant nuclei. The method includes extracting from the plurality a decay product that is generated by radioactive decay of the reaction product isotope.

In at least one example, the neutrons are generated by a nuclear reactor or a subcritical assembly.

In at least one example, the neutrons are generated by a source that is neither a reactor nor a subcritical assembly.

The reactant nuclei may include molybdenum-98, in which case the decay product includes technetium-99m. In that case, the rate of reactant nuclei neutron capture divided by the rate of neutron production is greater than approximately 1%.

In at least one example, the moderating nuclei include nuclei of atoms that are chosen from a group consisting of deuterium, tritium, helium-4, lithium-7, beryllium, boron-11, carbon, nitrogen-15, oxygen, fluorine, neon-20 and neon-22.

The pluralities of reactant and moderating nuclei may be at least partially surrounded with at least one neutron reflector including moderating nuclei and whose thickness is greater than approximately 20 centimeters and less than approximately 15 meters. Both an outer and an inner neutron reflector may reflect neutrons towards regions containing higher densities of reactant nuclei.

According to the invention, temperature control is used for maintaining at least 2 different regions of the apparatus at different temperatures, and at least one region is cooled to a temperature below 250 degrees Kelvin. The temperature control may use a cryogenic fluid.

In at least one example, a target is configured to emit neutrons when impacted by accelerated particles, the target including atoms chosen from a group consisting of deuterium, tritium, helium-4, lithium-7, beryllium, boron-11, carbon, nitrogen-15, oxygen, fluorine, neon-20, neon-22, tantalum, tungsten, lead, mercury, thallium, thorium, uranium, neptunium and other transuranics. The accelerated particles enter the system via an access channel configured to accept greater than 50 percent of the accelerated particles that impinge upon the access channel.

## BRIEF DESCRIPTION OF THE DRAWINGS

The previous summary and the following detailed descriptions are to be read in view of the drawings, which illustrate particular exemplary embodiments and features as briefly described below. The summary and detailed descriptions, however, are not limited to only those embodiments and features explicitly illustrated.

FIG. 1 illustrates a known induced fission process of producing molybdenum-99 and technetium-99m.
FIG. 2 illustrates a known neutron activation process of producing molybdenum-99 and technetium-99m.
FIG. 3 is a cross-sectional view of an apparatus for producing reaction-product nuclei from reactant nuclei according to at least one embodiment.
FIG. 4 is a perspective view of another apparatus for producing reaction-product nuclei from reactant nuclei according to at least one other embodiment.
FIG. 5 is a diagrammatic view of the interior of the apparatus of FIG. 4.
FIG. 6 is a diagrammatic view of the interior of an apparatus for producing reaction-product nuclei from reactant nuclei according to yet another embodiment.
FIG. 7 is a cross-sectional view of a system for the production of desired nuclear species according to still another embodiment.
FIG. 8 illustrates a particle accelerator directing a high-energy beam of particles into the system of FIG. 7 according to at least one embodiment.
FIG. 9 illustrates a thermal control system in use with a layered shell vessel.

## DETAILED DESCRIPTIONS

These descriptions are presented with sufficient details to provide an understanding of one or more particular embodiments of broader inventive subject matters. These descriptions expound upon and exemplify particular features of those particular embodiments without limiting the inventive subject matters to the explicitly described embodiments and features. Considerations in view of these descriptions will likely give rise to additional and similar embodiments and features without departing from the scope of the inventive subject matters. Although steps may be implied relating to features of processes or methods, no implication is made of any particular order or sequence among expressed or implied steps unless an order or sequence is explicitly stated.

To promote an understanding of the below descriptions of particular exemplary embodiments, and to clarify that the full scope of the descriptions extends beyond any particularly described embodiment, several underlying principles may be considered without imposing limitations on the exemplary embodiments. According to these underlying principles, isotope production can be implemented by:

1) Using a neutron source that is neither a nuclear reactor nor a subcritical assembly;
2) Achieving a high likelihood of neutron capture by intended reactant nuclei by choice of moderating nuclei;
3) Returning escaping or leaking neutrons to a reaction chamber by use of a neutron reflector; and/or
4) Using temperature enhancement of neutron capture, preferably low temperature enhancement of neutron capture.

That is, neutrons can be provided for neutron capture reactions without the use of a nuclear fission reactor or a subcritical assembly, in which naturally fissile material in a subcritical amount or arrangement undergoes some degree of induced fission without reaching criticality. For the purposes of this disclosure, the term subcritical assembly shall be understood to imply the possibility of a subcritical reactor. In the following descriptions, specially designed structures are implemented to cause entering neutrons to be moderated and reflected in such a way as to greatly increase their chances of being captured by a given intended reactant nucleus such as molybdenum-98 ($^{98}$Mo). Vessels and housings described below are configured, generally, to minimize neutron leakage and to maximize internal neutron scattering, like a flux trap, but not in the context or confines of a nuclear reactor. Cooling a volume containing reactant nuclei, for example by using a cryogenic fluid like liquid helium, oxygen, nitrogen, or deuterium, increases the likelihood of neutron capture by an intended reactant nucleus. For the purposes of this description, a reaction chamber is any volume in which reactant nuclei capture neutrons.

An exception to underlying principle 1 described above, encountered in some of the succeeding embodiments, is when the source of neutrons could be a nuclear reactor or subcritical assembly. For example, a nuclear reactor or subcritical assembly might be configured to leak neutrons so as to provide a source of neutrons for some of the embodiments described below. For example, in one embodiment, a nuclear reactor or subcritical assembly is located in proximity to the reactant nuclei sufficient to produce reaction-product nuclei by neutron capture at a rate exceeding $10^7$ neutron captures/second. In these examples, the geometry of either the nuclear reactor or the apparatus might be modified so as to facilitate the transport of neutrons from the nuclear reactor or subcritical assembly to the volumes of apparatus containing reactant nuclei.

Modeling simulations indicate that a system including a 1-3 meter diameter vessel (spheres and concentric spherical shells) that implements at least to some degree some of the above principles can produce many hard-to-manufacture radioisotopes ("RI"s), including $^{99}$Mo, at neutron efficiencies exceeding the current state of the art, where neutron efficiency is defined as:

$$\text{Neutron Efficiency} = \left.\left(\text{production rate of reaction-product nuclei}\right)\right/\left(\text{neutron production rate}\right)$$

For this definition, it is understood that the production rates described are those observed during periods of operation, more specifically during the period of operation when neutrons are being produced. For this definition, it is also understood that the neutrons in the denominator's "neutron production rate" refer to the initially produced neutrons (e.g. by nuclear spallation, DT reactions, from fission) rather than neutrons subsequently produced due to secondary reactions (e.g. such as from (n,xn) reactions). Initially produced neutrons, for example, would include both neutrons originating external to the apparatus and then incident upon the apparatus, and also neutrons produced within the apparatus by the action of a charged particle reaction such as a DT reaction or a spallation reaction. Subsequent neutron multiplication, e.g. (n,xn) reactions, do not contribute towards increasing the denominator. It is also understood, for this definition, that the rates mentioned in the numerator and denominator are considered to be averaged over short time intervals, preferably minutes and more preferably seconds, rather than over long periods of time such as hours, days or more. The rates described should be considered in the context of instantaneous rates rather than averaged rates considered over long time spans such as hours.

Simulations indicate that neutron efficiency values of up to 25 percent are achievable upon implementation of one or more of the embodiments described below. Higher efficiencies might be realized upon improvement upon one or more of the embodiments by certain improvements in reflector geometry, temperature and/or elemental composition. Several embodiments of a system for the production of at least one isotope are described in the following detailed descriptions and are represented in the drawings. In at least one such embodiment, a system for the production of isotopes includes a reaction chamber in which reactant nuclei are present, and in which moderating nuclei may be present. Neutrons for neutron capture reactions are introduced into the reaction chamber from an external neutron source, or are produced locally, for example via spallation when a spallation target inside of or nearby the reaction chamber is impacted by accelerated particles. At least some of the neutrons that initially avoid capture and escape regions with high concentrations of reactant nuclei are subsequently reflected back towards those regions, to increase the likelihood that each neutron will be captured by the intended reactant nuclei. Single and multiple reflector arrangements are described in the following. The reflector may double in function as a physical wall of the reaction chamber. The reflector may be formed using moderating nuclei within the reaction chamber.

The following descriptions refer to reactant nuclei, reaction product nuclei, decay-product nuclei, and moderating nuclei. Unless otherwise expressly stated or implied, such references are made without regard to whether electrons are bound in electron shells about the nuclei. These descriptions relate therefore to both ionized and charge-balanced atomic arrangements of the described nuclei, such that the described nuclei may be that of uncharged atoms, ionized atoms, free atoms, and atoms bound in molecular bonds including ionic and covalent bonds. The described nuclei may be present in solid, gas, gel, liquid, or other forms. The reactant and moderating species may be combined as disordered mixtures, regular matrices, and molecular compounds prior to neutron exposure and such arrangements may be maintained, altered, or lost upon, for example, neutron capture reactions leading to subsequent decays. The reactant nuclei may be concentrated in a single location or dispersed throughout the apparatus. The reactant nuclei may, if in solid form, be concentrated into one or more pellets, or into foils with large surface areas, or into other shapes. The reactant nuclei may be in solution within a solvent, or may be a component in a liquid, or may be in gaseous form.

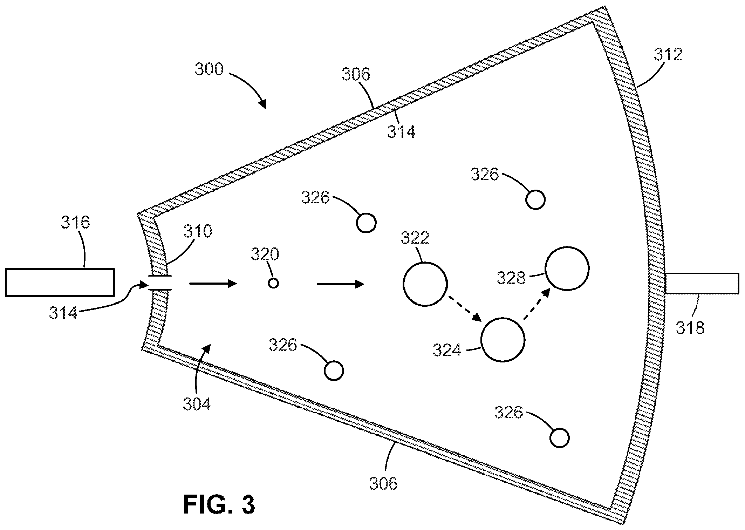

An apparatus 300 for producing reaction-product nuclei from reactant nuclei is shown in cross-sectional view in FIG. 3. The apparatus 300 shaped in cross-sectional view as a circular sector defines a reaction chamber 304. Radial sidewalls 306 diverge from a proximal end wall 310 to a distal end wall 312 such that the chamber 304 expands from the proximal to distal end wall. An access channel 314 formed through the proximal end wall 310 permits neutrons to enter the reaction chamber 304 from a neutron source 316, which in the illustrated embodiment is not a nuclear reactor or a subcritical assembly. The neutron source 316 is in proximity to the reactant nuclei sufficient to produce reaction-product nuclei by neutron capture. The element 318 in FIG. 3 represents a channel or process by which, for example, reactants, products, or other chemical or nuclear species are entered into or extracted from the chamber 304.

The walls of the reaction chamber or chambers optionally serve as neutron reflectors, surrounding the reaction chamber 304, returning at least some of the neutrons that reach and/or enter the walls to the reaction chamber 304 to increase the likelihood that each neutron will be captured by the intended reactant nuclei. The walls include moderating nuclei, such that the walls are composed of high moderating ratio material having a low microscopic thermal neutron capture cross section. For example, the walls may include beryllium and/or carbon. The walls in terms of thickness, in at least one embodiment, are greater than approximately 20 centimeters and less than approximately 15 meters.

Within the reaction chamber 304, neutrons 320 are preferably captured by reactant nuclei 322 to produce desired reaction product nuclei 324. Moderating nuclei 326 are also present in the reaction chamber 304 in the illustrated embodiment, the moderating nuclei also optionally serving as reflecting nuclei. A sufficient thickness of reflecting nuclei may also serve as a reflector in a variety of geometric embodiments.

According to the invention, the plurality of reactant nuclei 322 has a first average microscopic thermal neutron capture cross-section. Also included and hereby defined is a collection of isotopes consisting of those isotopes whose nuclei species capture at least 1% of all emitted neutrons from the neutron source and which are not reactant nuclei. Also defined is a second plurality of nuclei consisting of all nuclei from the collection of isotopes, wherein at least approximately 90% of the nuclei have microscopic thermal neutron capture cross-sections that are lower than the microscopic thermal neutron capture cross-section of any of the reactant nuclei.

According to the invention, the total mass of moderating nuclei is greater than approximately 1 kilogram. According to the invention, the apparatus 300 includes temperature control capable of cooling at least 0.1 kg of the system to a temperature at or below approximately 250 degrees Kelvin.

In at least one embodiment, the reactant nuclei 322 include molybdenum-98 nuclei, and the rate of reactant nuclei neutron capture divided by the rate of neutron source production is greater than approximately 1%. In at least one embodiment, the rate of reactant nuclei neutron capture divided by the rate of neutron source production is greater than approximately 5%.

In at least one embodiment, the reaction product nuclei 324 include molybdenum-99 nuclei produced from molybdenum-98 reaction product nuclei 324 by neutron capture reactions. Due to the decay of molybdenum-99 nuclei, technetium-99m decay-product nuclei may also be present.

In at least one embodiment, the moderating nuclei 326 include nuclei of atoms that are chosen from a group consisting of deuterium, tritium, helium-4, lithium-7, beryllium, boron-11, carbon, nitrogen-15, oxygen, fluorine, neon-20 and neon-22.

The neutron source 316 diagrammatically represents many types of neutron sources that are not nuclear reactors or subcritical assemblies. Suitable examples include neutron emitters, neutron generators and neutron production devices. In at least one embodiment, the illustrated neutron source 316 represents a neutron generator with a neutron emission that is greater than $1 \times 10^{14}$ neutrons per second. The neutron generator may include a proton, deuteron, or helium-ion accelerator with a projectile energy greater than 8 MeV (much lower for DT neutron-producing reactions) and beam current typically in the range of a milliamp or higher, although systems may be designed with beam current in the range of microamps to hundreds of microamps. Thus, in various embodiments, neutrons 320 are provided by the neutron source 316, and the neutrons irradiate the reactant nuclei 322 such that the reaction product nuclei 324 are generated when the neutrons 320 are captured by the reactant nuclei 322.

The system 300 is utilized to produce a particular nuclear species in a staged process that includes induced neutron capture followed by one or more stages of radioactive decay resulting in production of the particular nuclear species. In at least one example, reactant nuclei 322 are exposed to neutrons 320 to produce, through neutron capture, reaction-product nuclei 324. Natural radioactive decays of the reaction-product nuclei 324 then subsequently produce decay-product nuclei 328 of a desired particular nuclear species. In a particular example, the reactant nuclei 322 in FIG. 3 represent $^{98}$Mo nuclei that capture neutrons 320 to produce $^{99}$Mo nuclei, which are represented by reaction-product nuclei 324. Continuing that particular example, the decay-product nuclei 328 represent a desired nuclear species, $^{99m}$Tc, produced by the radioactive decay of $^{99}$Mo. It should be understood that FIG. 3 represents many other particular examples in which a desired nuclear species is populated in a decay chain in which one or more radioactive decays occur following the production of the reaction-product nuclei 324 by neutron capture reactions induced by irradiating reactant nuclei 322 with neutrons 320. While $^{99}$Mo produces $^{99m}$Tc in a single stage of radioactive decay following neutron capture by $^{98}$Mo, these descriptions relate as well to various other decay sequences in which multiple stages of decay occur.

Generally, various solvents or fluids into which the $^{98}$Mo reactant isotope 322 may be dissolved or suspended may be used as the moderator 326 or a part thereof, as long as the atoms within each solvent or fluid constituent have a low microscopic thermal neutron capture cross-section relative to that of the $^{98}$Mo reactant 322. Generally, these solvents or fluids may be composed of elements like hydrogen, helium, beryllium, carbon, oxygen, fluorine, and a few isotopes of other elements. The $^{98}$Mo reactant 322 may be suspended or dissolved either in regular or liquid form into these solvents or fluids.

For example, the microscopic thermal neutron capture cross-section of the $^{98}$Mo of the reactant 322 is much higher than the microscopic thermal neutron cross-section of deuterium oxide 332 nuclei in liquid. As an example, the microscopic thermal neutron cross-section of $^{98}$Mo reactant 322 is about 130 millibarns versus less than one millibarn for either of those of the two hydrogen or one oxygen atoms. As such, the per nucleus probability of a neutron 320 being captured by the $^{98}$Mo reactant 322 nucleus is much higher than the probability of a neutron being captured by deuterium oxide. Once a neutron 320 is captured by the $^{98}$Mo reactant nucleus 322, it forms the $^{99}$Mo reaction-product 324. The $^{99}$Mo reaction-product 324 then decays to create the $^{99m}$Tc decay-product 328, which may be directly and continuously extracted from the chamber 304 via a channel 318, which may include a valve or other mechanical and chemical structures meant to perform radiochemical separation to isolate the desired reaction or decay product.

Alternatively, instead of suspending or dissolving the $^{98}$Mo reactant 322 in a separate liquid or fluid, the $^{98}$Mo reactant 322 may itself be part of a liquid compound. Non-limiting examples include: difluoromolybdenum ($^{98}$MoF$_2$); molybdenum fluoride ($^{98}$MoF$_3$); molybdenum tetrafluoride ($^{98}$MoF$_4$); molybdenum hexafluoride ($^{98}$MoF$_6$); compounds of molybdenum, oxygen, and/or fluorine ($MoO_nF_m$).

Generally, the apparatus 300 directs neutrons 320 into a volume where neutrons are captured by $^{98}$Mo instead of by other nuclei, in a ratio that is significantly higher than in systems that lack strong thermalization and/or high moderating ratios, even though $^{98}$Mo has a low microscopic thermal neutron capture cross-section in isolation (of about 130 millibarns). As such, the apparatus 300 allows the neutrons 320 emitted from the neutron source to be captured by the desired reactant nuclei without the majority of neutrons 320 leaking out or being captured by nuclei other than $^{98}$Mo, and thus being wasted. The result is that the efficiency of capturing neutrons on the desired reactant nuclei in the apparatus 300 is high (between 1 and 30%) and generally described by the following previously described relationship:

$$\text{Neutron Efficiency} = \text{(production rate of reaction-product nuclei)} \Big/ \text{(neutron production rate)}$$

where the reaction-product nuclei are $^{99}$Mo in situations where the reactant nuclei comprise $^{98}$Mo. However, certain models have shown that by altering the temperature of the reactant nuclei, higher efficiencies than 30% may be attainable.

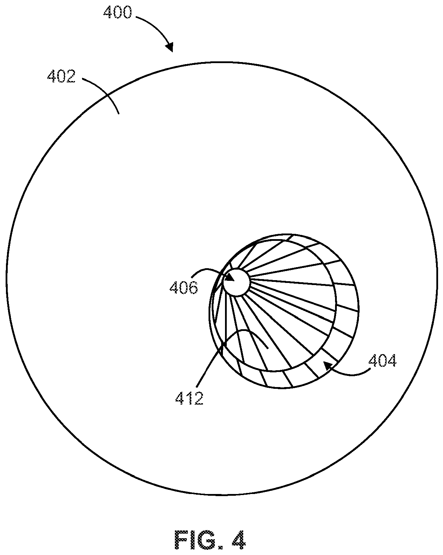

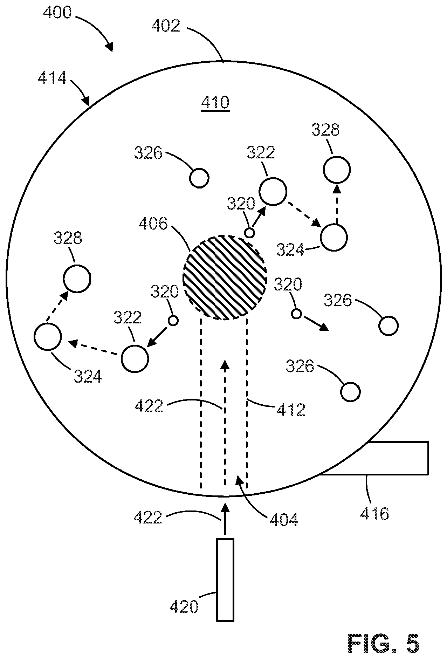

A system 400 for producing reaction-product nuclei from reactant nuclei is represented in FIGS. 4-5. The system includes a spherical wall 402. An access channel 404 defined through the wall 402 permits access for accelerated particles to a central spherical target 406. A spherical shell-shaped reaction chamber 410 (FIG. 5) at least partially surrounds the target 406. The surrounding chamber may surround the target concentrically. The target 406 is configured to emit neutrons when impacted by accelerated particles that reach the target through the access channel 404. The target 406 may be constructed of such materials as deuterium, tritium, helium-4, lithium-7, beryllium, boron-11, carbon, nitrogen-15, oxygen, fluorine, neon-20, neon-22, tantalum, tungsten, lead, mercury, thallium, thorium, uranium, neptunium and other transuranics. The access channel configured to accept greater than 50 percent of the accelerated particles that impinge upon the access channel.

Like the walls of the reaction chamber 304 of FIG. 3, the wall 402 of FIGS. 4-5 serves as a neutron reflector, surrounding the reaction chamber 410 and returning at least some of the neutrons that reach the wall to the reaction chamber 410, which contains higher densities of reactant nuclei, to increase the likelihood that each neutron will be captured by reactant nuclei. The wall includes moderating nuclei, such that the wall is composed of high moderating ratio material having a low neutron capture cross section. For example, the wall 402 may include beryllium and/or carbon. The wall in terms of thickness, in at least one embodiment, is greater than approximately 20 centimeters and less than approximately 15 meters. In some embodiments, thickness values between one and three meters are used.

In the illustrated system, the access channel 404 is defined by a radially extending tubular wall 412 that connects an outer surface 414 of the vessel wall 402 to the target 406. As shown in FIG. 5, the spherical shell shaped reaction chamber 410 is isolated from the access channel 404 by the spherical target 406 and radially extending tubular wall 412. The spherical housing 400 may also include a channel 416 for directly extracting reaction or decay products from the reaction chamber 410. The channel 416 may include a valve and other similar mechanical structures.

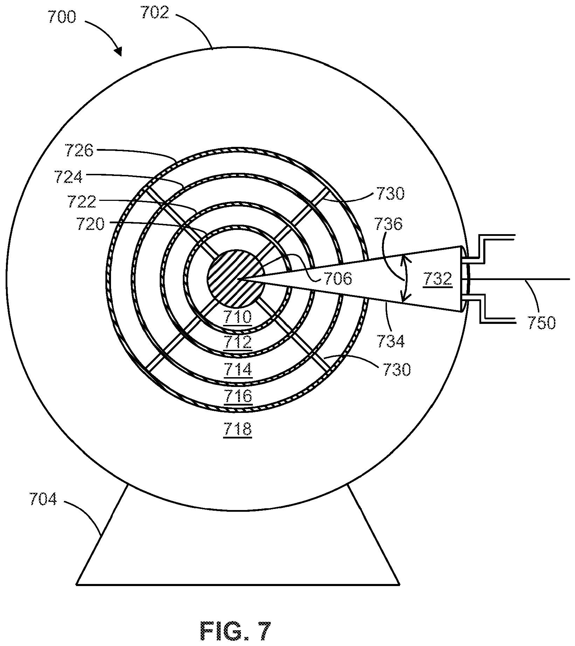

A particle accelerator 420 directs a high-energy beam 422 of particles into the access channel 404 of the system 400 (FIG. 7.) The target 406 within the path of the beam 422 produces neutrons as the beam of particles strike the target. The particle accelerator 420 may provide, for example, a high-energy beam of protons, deuterons, tritons, helium, or other particles. The particle accelerator 420 and target 406 together constitute a neutron source that is neither a reactor nor a subcritical assembly.

Neutrons produced at the target 406 are emitted in a fully or partially isotropic fashion. Thus, putting the neutron emitting target at the center of the approximately spherical reaction chamber facilitates a relatively uniform distribution of neutrons in that volume of the reaction chamber 410 where intended reactant nuclei await the emitted nuclei. Nonetheless, where neutrons are provided or emitted anisotropically or directionally, the target 406 may be constructed and placed, for example non-concentrically with the wall 402, at any location within or relative to the reaction chamber 410 to maximize neutron efficiency with regard to capture by intended reactant nuclei in the chamber.

Within the reaction chamber 410 (FIG. 5), as already described with reference to the reaction chamber 304 of FIG. 3, neutrons 320 are captured by reactant nuclei 322 to produce desired reaction product nuclei 324. As such, the reaction product nuclei 324 may include molybdenum-99 nuclei produced from molybdenum-98 reaction product nuclei 324 by neutron capture reactions. Due to the decay of molybdenum-99 nuclei, technetium-99m decay-product nuclei 328 may also be present. Moderating nuclei 326 may also present in the reaction chamber 410, the moderating nuclei also optionally serving as reflecting nuclei. In at least one embodiment, and as already described with reference to FIG. 3, the moderating nuclei 326 include nuclei of atoms that are chosen from a group consisting of deuterium, tritium, helium-4, lithium-7, beryllium, boron-11, carbon, nitrogen-15, oxygen, fluorine, neon-20 and neon-22.

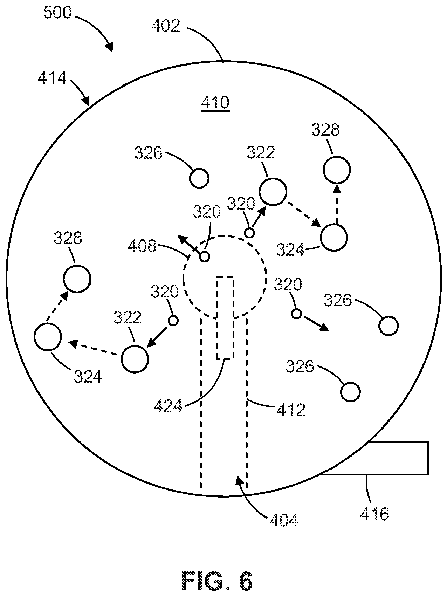

A system 500 for producing reaction-product nuclei from reactant nuclei is represented in FIG. 6. The system 500 differs from the system 400 of FIG. 5 in that a neutron source 424 is used in lieu of the accelerator 420 and target 406. In FIG. 6, a central chamber 408 is defined within the reaction chamber 410 to receive the neutron source 424 through the access channel 404. The neutron source 424 may be a neutron generator device capable of emitting neutrons in an isotropic fashion, or a radioactive decay source that emits neutrons, such as Californium-252. The system 500 is otherwise similar to the system 400 to such extent that above descriptions referring to FIG. 5 are applicable as well to FIG. 6, particularly where like reference number refer to like elements.

In an operational example relating to FIGS. 3, 5 and 6, the reactant 322 intended for neutron capture is $^{98}$Mo, the reaction product 324 is $^{99}$Mo, and the decay product isotope is $^{99m}$Tc. Neutrons 320 are emitted into the reaction chamber 410. When a neutron 320 is captured by a $^{98}$Mo reactant nucleus 322, a $^{99}$Mo reaction-product 324 nucleus is produced. The $^{99}$Mo reaction-product nucleus 324 ultimately decays to form a $^{99m}$Tc decay-product nucleus 328 through beta decay. In this example, the reactant nuclei 322 and moderating nuclei 326 may be present in a liquid, gas, or gel as non-limiting examples.

In this operational example, the $^{98}$Mo reactant 322 may be combined with the moderator 326 in a solution, or suspension. The moderating nuclei 326 may include deuterium, tritium, helium-4, lithium-7, beryllium, boron-11, carbon, nitrogen-15, oxygen, fluorine, neon-20 and neon-22 as non-limiting examples. Further moderator examples include deuterated compounds such as deuterium oxide ($D_2O$), deuterated hydrogen peroxide ($D_2O_2$) and deuterated organic compounds ($D_nC_mO_p$). Other moderator examples include oxygen ($O_2$), carbon dioxide ($CO_2$), deuterated methanol, deuterated ethanol, and fluorine.

Various solvents or fluids in which the $^{98}$Mo reactant may be suspended may be used as long as the solvent or fluid constituents have a low microscopic thermal neutron capture cross-section relative to the $^{98}$Mo reactant. Generally, these solvents or fluids may be composed of elements like hydrogen, helium, carbon, oxygen, fluorine, and a few isotopes of other elements. The $^{98}$Mo reactant may be suspended or dissolved into these fluids or solvents.

Alternatively, instead of suspending or dissolving the $^{98}$Mo reactant in a separate liquid or fluid, the $^{98}$Mo reactant may be a constituent of a liquid or solid compound such as, for non-limiting examples, difluoromolybdenum, molybdenum fluoride, molybdenum tetrafluoride, molybdenum hexafluoride, molybdenum oxides, and compounds of molybdenum, oxygen, and fluorine ($MoO_nF_m$).

The decay-product or reaction-product nuclei may be directly and continuously extracted from the reaction chamber via the element 318 (FIG. 3) or channel 416 (FIGS. 5 and 6), each of which may include a valve or other mechanical and chemical structures meant to perform radiochemical separation to isolate the desired product. Processing may proceed continuously or in batch mode.

A system 700 for the production of desired nuclear species is represented in FIG. 7. The system 700 includes an at least partially spherical assembly within an outer wall 702. The system 700 is supported by a base 704, represented as a trapezoidal pedestal for exemplary purposes. The base 704 supports the weight of the system 700 without interfering with practical operation. Within the outer wall 702, multiple spherical shell layers surround a central target 706 in a concentric arrangement. The central target 706 emits neutrons when a beam 750 of particles is incident upon the target. The neutrons are emitted into the spherical shell layers surrounding the central target 706, at least some of the neutrons passing from the inner-most layer 710 to more outer layers. At least one of the spherical shell layers serves as a neutron capture reaction volume, having nuclei intended for neutron capture reactions present. Other layers serve as moderating and/or reflective layers to increase the likelihood that neutrons emitted from the central target 706 are captured by intended nuclei.

Although five spherical shell layers are illustrated in FIG. 7, these descriptions relate to layered structures having less than and more than five spherical shell layers. For purposes of example, the spherical shell reaction chamber layers illustrated in FIG. 7 are described herein, in increasing radial size from the central spherical target 706 to the outer wall 702, as: a first layer 710; a second layer 712; a third layer 714; a fourth layer 716; and a fifth layer 718, in which their numbered order corresponds to their radially ordered positions in the layered structure. In at least one embodiment, the central spherical target is replaced by a chamber defining an inner-most layer.

Like the walls of the reaction chamber 304 of FIG. 3, the wall 702 of FIGS. 7 may serve as a neutron reflector, surrounding the reaction chambers and reflecting at least some of the neutrons that reach the wall to increase the likelihood that each neutron will be captured by an intended reactant nucleus. The wall includes moderating nuclei, such that the wall is composed of high moderating ratio material having a low neutron capture cross section. For example, the wall 702 may include beryllium, oxygen and/or carbon. Moderating nuclei may be present in the spherical shell layers interior to the walls of the reaction chamber, and these moderating nuclei may also serve as neutron reflectors. The wall in terms of thickness, in at least one embodiment, is greater than approximately 20 centimeters and less than approximately 15 meters. Thicknesses close to 1-2 meters are used in some embodiments.

In FIG. 7, four spherical radially intermediary boundaries are illustrated in cross-section as: a first boundary 720 between the first layer 710 and second layer 712; a second boundary 722 between the second layer 712 and third layer 714; a third boundary 724 between the third layer 714 and fourth layer 716; and a fourth boundary 726 between the fourth layer 716 and fifth layer 718.

The spherical boundaries represent, in various embodiments, either: structural materials supporting and separating the adjacent layers; or the interface where layers meet without additional structural materials maintaining their separation. That is, the central spherical target 706 and ordered layers 710, 712, 714, 716 and 718 are distinct in various embodiments by their positions, contents and other physical properties such as temperatures with or without intervening material between them at the radially intermediary boundaries. Additional structural members may be used to connect and/or support each layer and boundary. Exemplary radially arranged beams 730, extending like spokes, are illustrated in FIG. 7 as interconnecting the boundaries 720, 722, 724 and 726.

Structural materials by which the spherical boundaries may be constructed, in the system 700 of FIG. 7, include low microscopic thermal neutron capture cross-section materials. For example silicon carbide, beryllium carbide, carbon, and zirconium may be used. The optimum thickness for structural material layers and their compositions vary among embodiments. Structural layers in various embodiment are thick enough to impart stability but not so thick as to excessively capture neutrons and lower neutron efficiency. In some embodiments, structural materials with average microscopic thermal neutron capture cross sections of less than 300 millibarns, such as zirconium, may be used. In other embodiments, structural material with average microscopic thermal neutron capture cross sections of less than 30 millibarns may be used, such as polymers or plastics containing carbon, deuterium and oxygen. In some embodiments, materials providing structural support may double as moderating nuclei.

Upon emission of neutrons from the target 706, neutron capture processes occur between the target and an outer wall 702 of the system 700 within one or more of the surrounding layers 710, 712, 714, 716, and 718 to facilitate production of a desired nuclear species. The outer wall 702 is illustrated as a spherical boundary for convenience but may take other form in some embodiments.

An access channel 732 is represented as a tapered bore that diminishes in size from the outer wall 702 toward the central spherical target 706. The access channel 732 permits a beam 750 of particles to reach the target 706. A radially extending wall 734 defining the access channel 732 is illustrated in FIG. 7 as conically shaped to match the tapered bore through the layered structure. In various other examples, the wall 734 and bore have other shapes, for example matching cylindrical shapes without taper, to define the access channel 732. The radially extending wall 734 in at least one embodiment connects the outer wall 702 to the central target 706, isolating the layers 710, 712, 714, 716 and 718 from each other, and from the exterior of the outer wall 702 while permitting access to the central target 706.

The access channel 732 is illustrated as subtending s solid angle 736, which is shown as an acute angle for exemplary illustrative purpose. In other embodiments, the angle 736 is obtuse. In at least one embodiment, the solid angle 736 is approximately $2\pi$ steradians such that the layers 710-718 are hemispherical. Thus, in various embodiments, the solid angle 730 can be of any value and the access channel 732 can be of any size and shape.

The access channel 732 can serve two or more purposes. It allows a particle beam to reach the center of the system 700, where incoming particles such as protons, deuterons, helium nuclei, and other projectiles can produce neutrons, for example by inducing nuclear reactions at a central target. For example, if beryllium is used as the central target 706, incoming high energy particles like protons can make neutrons by a $^9$Be(p,n) reaction. The access channel 732 also allows for the entry and exit of cooling fluid to control temperature in the layers of the system 700. For example, liquid helium, oxygen, and/or other coolants might be used to maintain the temperatures of the central spherical target 706 and layers 710-718, each at a particular respective temperature. In the system 700, temperatures are maintained to preferentially control the moderating ratio and/or to increase the microscopic neutron capture cross-section of a desired reactant isotope. In some embodiments, temperatures are lowered in some layers to less than 100 degrees K, and even to as low as the boiling point of helium, and even lower still.

One or both of these described purposes might be served by the access channel 732 in various embodiments. For example, a neutron generation mechanism might be entirely contained inside the vessel, and cooling or heating may or may not be needed. Furthermore, more than one bore may be present. The shapes, sizes, locations and numbers of bores can vary without changing the principles above. Some embodiments might not use any bores.

In at least one embodiment, the neutron-emitting target comprises at least 10 grams of nuclei that possess a microscopic thermal neutron capture cross-section greater than that of the reactant nuclei, in a volume where neutron energy is much higher than thermal energy. In at least one embodiment, the neutron-emitting target comprises at least 10 grams of nuclei that possess a microscopic thermal neutron capture cross-section greater than that of the reactant nuclei, and where the neutron-emitting target is configured (e.g. geometrically, thermally) to absorb as few neutrons as possible, for example less than 1, 5, or 10% of all neutrons produced at the target.

In at least one embodiment, an externally delivered beam 750 of particles enters the access channel to create neutrons through nuclear reactions at the target 706. In another example, an RI decay source of neutrons is placed at the target location, for example AmBe, $^{252}$Cf, PuBe, and other sources may be used.

Because the system is designed to moderate neutrons of even high energy (for example, even greater than 8-14 MeV), the system can handle a wide variety of neutron energy input without loss of function. For example, DT neutrons and spallation sources may be used. Various neutron intensities or input rates are also acceptable. An underlying design principle implemented by one or more embodiments described herein is directed to increasing the probability that any one neutron gets captured by a given intended reactant. As a result, the intensity of the neutrons delivered into the vessel should not greatly vary the average neutron efficiency.

There already exist commercial accelerators, for example, that can reach the energies and beam currents necessary to produce these neutrons intensities. For example, particles including protons, deuterium, tritium, helium, and other examples, when incident upon a neutron-producing target, can make between 0.1 and 5 neutrons per incident particle at energies of tens to a few hundreds of MeV. Different targets yield different neutron yields in a process called nuclear spallation.

In at least one example, a beam of high energy (tens to hundreds MeV) particles are incident on a neutron rich target, generating sufficient neutrons for practical operation. Assuming approximately one neutron is generated per incident nuclear particle, a beam of about $10^{16}$ particles per second, or a few milliamps of beam current, is necessary. Beams that can provide a few tens or hundreds of MeV at milliamp beam currents or higher are available in industry research implementations, for example in proton therapy. Higher or lower beam energies and beam currents may be warranted to reduce cost or to change production rate over time to alter the rate of neutron-producing-target heating, for example due to heating as the high energy particles decelerate, in which some collisions generate heat instead of (or in addition to) neutrons.

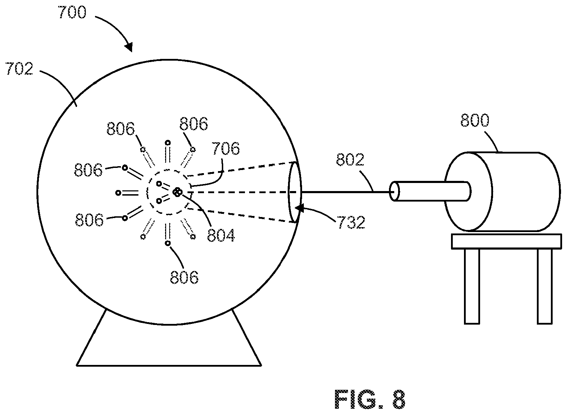

In FIG. 8, a particle accelerator 800 directs a high-energy beam 802 of particles into the access channel 732 of the system 700 (FIG. 7.) In FIG. 8, only the central spherical target 706 is expressly illustrated to represent the layered shell structure more expressly illustrated in FIG. 7. As with FIG. 7, FIG. 8 represents layered structures having any number of approximately spherical shell layers. FIG. 8 illustrates a configuration in which an intended reactant nuclide may be present in any or all layers, and may additionally serve as structural material. Target nuclei 804 within the path of the beam 802 produce neutrons 806 as the beam particles strike. In this diagrammatic representation, a particle accelerator 800, emitting for example protons, deuterons, tritons, helium, or other particles, makes a high energy beam of incident particles or nuclei that enter the system 700 through the access channel 732, hit the target 804, causing neutrons 806 to be emitted. FIGS. 7-8 represent many configurations of materials and geometries that are characterized by a high moderating ratio volume within the system 700. The arrangements represented can be varied within the scope of these descriptions without compromising the high neutron efficiency.

Many forms of neutron production according to embodiments within the scope of these descriptions cause neutrons to be emitted in a mostly or partially isotropic fashion. Putting the neutron emitting target close to the center of the volume can help distribute isotropically emitted neutrons uniformly into zones rich with nuclei intended for neutron capture to help maximize neutron efficiency. Alternatively, in situations with anisotropy in neutron emission, the neutron emitter location and shape may be varied or optimally selected to improve neutron efficiency.

Heating and/or cooling is provided in various embodiments to maintain a neutron-producing target at a selected stable temperature. Cooling is used to facilitate enhancement of the neutron capture rate of reactant nuclei by reducing neutron energy and thereby enhancing the microscopic neutron capture cross-section of the intended reactant nuclei, such as $^{98}$Mo nuclei. Cooling may include cryogenic cooling. Heating may also be used to reduce neutron capture of non-reactant nuclei by increasing neutron energy. The coolant and any tubing, piping, and casing that carry the coolant within the housings described herein preferably also have small microscopic neutron capture cross-sections, but are able to handle colder-than-room-temperature or cryogenic temperatures without compromising functional integrity. Tubing materials can include, for example: any polymer constructed with carbon, deuterium, oxygen, beryllium, fluorine, and other low microscopic neutron capture cross-section materials; or metals like, for example, zirconium. Sufficient coolant should be applied to remove waste heat created during neutron creation, and also to cool any layers of the volume down to temperatures below room temperature, for example, down to 100 degrees K, 30 degrees K, 10 degrees K, or below the boiling point of helium. In some embodiments, the intentional use of heating to raise temperatures above room temperature might also be employed in order to increase neutron energy and thereby reduce microscopic neutron capture cross-sections.

Structural material used in constructions should be able to operate at lower-than-room-temperature and cryogenic temperatures, and also to withstand cycles of temperature between room temperature and lower-than-room-temperature or cryogenic temperature, if lower temperatures are used. Coolant, if used, may enter and leave interior volumes at more than one place. For example, in addition to entering and/or exiting at the bore, coolant might enter or leave at various conduits. Specialty low microscopic thermal neutron capture cross-section variants of commercially available structural materials, pipes, electronic components, heat exchangers, etc. may be used or specifically manufactured for use in this apparatus.

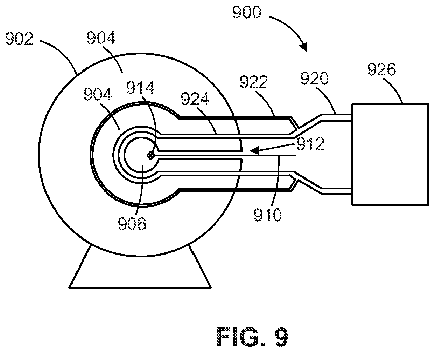

In FIG. 9, an exemplary thermal control system 900 is represented for use with a layered shell vessel 902 that represents layered structures having any number of spherical shell layers 904 concentrically arranged around a central spherical target or cavity 906. A high-energy beam 910 enters the vessel 902 through a bore 912 and a target nucleus 914 within the path of the beam 910 produces neutrons as the beam particles strike the target. FIG. 9 illustrates a configuration in which an intended reactant nuclide may be present in any or all layers, and thus diagrammatically represents thermally maintained implementations of at least the systems illustrated in FIGS. 5 and 7-8.

The thermal control system 900 includes any number of primary conduits 920 and sub-conduits 922 and 924 defining send and return fluid paths constituting a branched fluid distribution network implemented in the layered structure of the layered shell vessel 902 such that the shell layers 904 can be independently or together thermally maintained. In at least one embodiment, a standard cryogenic fluid producer 926 is used to cycle low microscopic neutron capture cross-section coolant fluid that is sufficiently free of higher microscopic neutron capture cross-section contaminants. In another embodiment, cooling fluid is used to keep reactant nuclei between 200 and 250 K. The cooling, whether cryogenic or otherwise, should be done in such a way so as not to interfere with the beam 910 entering the bore.

Particularly within the vessel 902, conduit lines, tubing, enclosures and the distributed coolant should have low microscopic neutron capture cross-sections so as to minimize neutrons being captured by material within the vessel other than the intended reactant. Various cooling systems and arrangements meeting these conditions are within the scope of these descriptions, as are various methods of lower-than-room-temperature or cryogenic fluid delivery, storage, and production.

In some embodiments, removal of a produced radioisotope may proceed by allowing the various layers to cool or heat up to room temperature naturally, or may occur by removing frozen material, if material is present in frozen form (for example $^{98}$Mo or $^{99}$Mo in solid $D_2O$, oxygen, nitrogen-15, etc.). Removal may also involve allowing liquid to evaporate, leaving only Mo, for example from Mo in liquid oxygen or helium.

In some embodiments, to extract and ship radioisotopes such as $^{99}$Mo, existing radiochemical methods and existing or modified supply chain procedures may be followed. In situations where $^{99}$Mo may not be easily extracted from $^{98}$Mo precursor or where such extraction is not warranted or necessary, the mass of Mo may be shipped together, used in Technetium-99m generators available commercially today, and returned to have the molybdenum extracted for re-use. In some embodiments, altered or improved Technetium-99m generators that can successfully use lower specific radioactivity levels than those used by the current commercial state of the art technetium generators may be used. Because using enriched molybdenum is helpful to high neutron efficiency operation, using a method of shipping and returning the vessel which minimizes the loss of enriched (expensive) $^{98}$Mo might be desirable. Apparatuses according to these descriptions are constructed in such a way that removing or adding reactant nuclei material, such as $^{98}$Mo, is fast and easy. For example, it may be constructed in such a way that the layer or layers containing reactant nuclei material are easily removed, pumped out, or added back.

The volume or volumes with the intended reactant nuclei for neutron absorption/capture is preferably specially constructed for convenient removal of the activated material after irradiation. Further, enriched material (for example $^{98}$Mo at 80 percent or more enrichment) may be used.

Several exemplary configurations are specified in further detail below in Tables 1-4, which specifies densities, materials, temperatures, dimensions are specified for the central target 706 and layers 710 (first layer), 712 (second layer), 714 (third layer), 716 (fourth layer) and 718 (fifth layer) for the system 700 of FIG. 7. It should be understood that these configurations are provided as examples without limiting these descriptions to those examples. Not all conceivable configurations will have a spherical central target and five concentric layers. These are just examples.

These exemplary configurations are derived from computer modeling using neutron transport codes. Modeling was performed using MCNP5, which is known and often used by those of skill in the art. For the sake of simplicity, modeling did not include structural materials such as those shown at radial positions corresponding to boundaries 720 722, 724, 726 in FIG. 7. In one instance of computer modeling of the system, summarized below, input neutrons were assumed to be emitted isotropically from the target 706 at 8 MeV. In other instances, computer modeling of the system assumed that a substantially larger spectrum of input neutron energies was used, with similar results. Note that the various materials in the below configurations may be in gas, liquid or solid form depending on temperature. In each, the molybdenum is assumed to be uniformly distributed in its indicated layer for simplicity, though it need not be for operation.

**Table 1 - Configuration 1**

| Chamber | Density (g/cm³) | Material | Temperature (degrees K) | Radial Range (cm) |
|---|---|---|---|---|
| Central Target | 1.85 | Beryllium | 300 | 0-20 cm |
| Layer 1 | 0 | Void | N/A | 20-30 cm |
| Layer 2 | 1.1 | $D_2O$ | 300 | 30-35 cm |
| Layer 3 | 1.86 | 51 parts O, 1 part $^{98}$Mo | 300 | 35-38 cm |
| Layer 4 | 1.1 | $D_2O$ | 300 | 38-58 cm |
| Layer 5 | 1.1 | $D_2O$ | 300 | 58-199 cm |

**Table 2 - Configuration 2**

| Chamber | Density (g/cm³) | Material | Temperature (degrees K) | Radial Range (cm) |
|---|---|---|---|---|
| Central Target | 1.85 | Beryllium | 300 | 0-20 cm |
| Layer 1 | 0 | Void | N/A | 20-30 cm |
| Layer 2 | 1.1 | $D_2O$ | 30 | 30-35 cm |
| Layer 3 | 1.86 | 51 parts O, 1 part $^{98}$Mo | 30 | 35-38 cm |
| Layer 4 | 1.1 | $D_2O$ | 30 | 38-58 cm |
| Layer 5 | 1.1 | $D_2O$ | 300 | 58-199 cm |

**Table 3 - Configuration 3**

| Chamber | Density (g/cm³) | Material | Temperature (degrees K) | Radial Range (cm) |
|---|---|---|---|---|
| Central Target | 1.85 | Beryllium | 300 | 0-20 cm |
| Layer 1 | 0 | Void | N/A | 20-30 cm |
| Layer 2 | 1.1 | $D_2O$ | 3 | 30-35 cm |
| Layer 3 | 1.86 | 51 parts O, 1 part $^{98}$Mo | 3 | 35-38 cm |
| Layer 4 | 1.1 | $D_2O$ | 3 | 38-58 cm |
| Layer 5 | 1.1 | $D_2O$ | 300 | 58-199 cm |

Neutron efficiency is predicted to go from about 2% to 15% as one goes from configuration 1 to configuration 3, representing production yields that would be commercially competitive $^{99}$Mo production rates in machine implementation.

**Table 4 - Configuration 4**

| Chamber | Density (g/cm³) | Material | Temperature (degrees K) | Radial Range (cm) |
|---|---|---|---|---|
| Central Target | 1.85 | Beryllium | 300 | 0-10 cm |
| Layer 1 | 0.12 | Void | N/A | 10-15 cm |
| Layer 2 | 2.85 | 22 parts $D_2O$, 1 part $^{98}$Mo | 3 | 15-20 cm |
| Layer 3 | 1.1 | $D_2O$ | 3 | 20-40 cm |
| Layer 4-5 | 1.1 | $D_2O$ | 3 | 40-199 cm |

Configuration 4 has an estimated neutron efficiency of about 20%.
Extra layers could be added, or layers removed, or these principles modified, or geometries or materials added or changed or altered without changing the premise of these descriptions.

Particular embodiments and features have been described with reference to the drawings. It is to be understood that these descriptions are not limited to any single embodiment or any particular set of features, and that similar embodiments and features may arise or modifications and additions may be made without departing from the scope of these descriptions and of the appended claims.

**Claims**

1. An apparatus (300) for producing reaction-product nuclei (324) from reactant nuclei (322), the apparatus (300) comprising:

   a neutron source (316);
   a first plurality of reactant nuclei (322) having a first average microscopic thermal neutron capture cross section;
   a collection of isotopes consisting of those isotopes whose nuclei species capture at least 1% of all emitted neutrons from a neutron source and which are not reactant nuclei;
   a second plurality of nuclei (326) consisting of all nuclei from the collection of isotopes, wherein at least approximately 90% of the nuclei have microscopic thermal neutron capture cross-sections that are lower than the microscopic thermal neutron capture cross-section of any of the reactant nuclei;
   wherein the neutron source (316) is in proximity to the reactant nuclei sufficient to produce reaction-product nuclei by neutron capture;
   **characterised by**
   the total mass of the second plurality of nuclei being greater than approximately 1 kilogram, and
   the apparatus (300) further comprising a temperature control configured to maintain at least two different regions of the apparatus at different temperatures, wherein at least one region is adapted to be cooled to a temperature bebw approximately 250 degrees Kelvin.

2. The apparatus (300) of claim 1, wherein the second plurality of nuclei (326) comprise nuclei of atoms that are chosen from a group consisting of deuterium, tritium, helium-4, lithium-7, beryllium, boron-11, carbon, nitrogen-15, oxygen, fluorine, neon-20 and neon-22.

3. The apparatus (300) of claim 1, wherein when in use the at least one region is cooled to a temperature bebw approximately 30 degrees Kelvin.

4. The apparatus (300) of claim 1 or 3, wherein the temperature control comprises the use of a cryogenic fluid.

5. The apparatus (300) of claim 2, further comprising at least one neutron reflector at least partially surrounding the first (322) and second (326) pluralities of nuclei, wherein the reflector comprises nuclei of the second plurality of nuclei (3226) and wherein the reflector thickness is greater than approximately 20 centimeters and less than approximately 15 meters.

6. The apparatus (300) of claim 2, further comprising both an outer and an inner neutron reflector configured to that reflect neutrons towards regions of the pluralities containing higher densities of reactant nuclei.

7. The apparatus (300) of claim 1, further comprising a target (804) configured to emit neutrons (806) when impacted by accelerated particles, wherein the target (804) is comprised of atoms chosen from a group consisting of deuterium, tritium, helium-4, lithium-7, beryllium, boron-11, carbon, nitrogen-15, oxygen, fluorine, neon-20, neon-22, tantalum, tungsten, lead, mercury, thallium, thorium, uranium, neptunium and other transuranics; and
   wherein the accelerated particles enter the system via an access channel (732) configured to accept greater than 50 percent of the accelerated particles that impinge upon the access channel (732).

8. A method for producing decay-product nuclei from a reactant isotope using a neutron source (316), the method comprising:

   generating neutrons;
   preparing a first plurality of reactant nuclei (322) having a first average microscopic thermal neutron capture cross section;
   preparing a collection of isotopes consisting of those isotopes whose nuclei species capture at least 1% of all emitted neutrons from a neutron source (316) and which are not reactant nuclei;
preparing a second plurality of nuclei (326) consisting of all nuclei from the collection of isotopes, wherein at least approximately 90% of the nuclei have microscopic thermal neutron capture cross-sections that are lower than the microscopic thermal neutron capture cross-section of any of the reactant nuclei, and wherein the total mass of the second plurality of nuclei is greater than approximately 1 kilogram; and
irradiating the plurality with the neutrons such that a reaction product is generated when the neutrons are captured by the reactant nuclei; and
extracting from the plurality a decay product that is generated by radioactive decay of the reaction product isotope;
the method further comprising the use of temperature control capable of maintaining at least 2 different regions of the apparatus at different temperatures, wherein at least one region is cooled to a temperature bebw 250 degrees Kelvin.

9. The method of claim 8, wherein the neutrons are generated by a nuclear reactor or a subcritical assembly.

10. The method of claim 8, wherein the neutrons are generated by a source that is neither a reactor nor a subcritical assembly.

11. The method of claim 8, wherein the second plurality of nuclei (326) comprise nuclei of atoms that are chosen from a group consisting of deuterium, tritium, helium-4, lithium-7, beryllium, boron-11, carbon, nitrogen-15, oxygen, fluorine, neon-20 and neon-22.

12. The method of claim 11, further comprising at least partially surrounding the first (322) and second (326) pluralities of nuclei with at least one neutron reflector comprising nuclei of the second plurality of nuclei (326) and whose thickness is greater than approximately 20 centimeters and less than approximately 15 meters.

13. The method of claim 11, further comprising both an outer and an inner neutron reflector that reflect neutrons towards regions containing higher densities of reactant nuclei.

14. The method of claim 8, wherein the at least one region is cooled to a temperature bebw 30 degrees Kelvin.

15. The method of claim 8 or 14, wherein the temperature control comprises the use of a cryogenic fluid.

16. The method of claim 8, further comprising configuring a target (804) to emit neutrons (806) when impacted by accelerated particles, wherein the target (804) is comprised of atoms chosen from a group consisting of deuterium, tritium, helium-4, lithium-7, beryllium, boron-11, carbon, nitrogen-15, oxygen, fluorine, neon-20, neon-22, tantalum, tungsten, lead, mercury, thallium, thorium, uranium, neptunium and other transuranics, and
wherein the accelerated particles enter the system via an access channel (732) configured to accept greater than 50 percent of the accelerated particles that impinge upon the access channel (732).

17. The apparatus according to claim 1, wherein the neutron (316) source is neither a nuclear reactor nor a subcritical assembly.

18. The method of claim 8 further comprising:
extracting from the plurality a decay product that is generated by radioactive decay of the reaction product isotope.

**Patentansprüche**

1. Eine Vorrichtung (300) zum Produzieren von Reaktionsproduktkernen (324) aus Reaktantenkernen (322), wobei die Vorrichtung (300) Folgendes beinhaltet:

   eine Neutronenquelle (316);
   eine erste Vielzahl von Reaktantenkernen (322), die einen ersten durchschnittlichen mikroskopischen thermischen Neutroneneinfangquerschnitt aufweisen;
   eine Sammlung von Isotopen, die aus denjenigen Isotopen besteht, deren Kernarten mindestens 1 % aller von einer Neutronenquelle emittierten Neutronen einfangen und die keine Reaktantenkerne sind;
   eine zweite Vielzahl von Kernen (326), die aus allen Kernen aus der Sammlung von Isotopen besteht, wobei mindestens etwa 90 % der Kerne mikroskopische thermische Neutroneneinfangquerschnitte aufweisen, die kleiner sind als der mikroskopische thermische Neutroneneinfangquerschnitt eines jeglichen der Reaktantenkerne;

wobei die Neutronenquelle (316) in ausreichender Nähe zu den Reaktantenkernen ist, um Reaktionsproduktkerne durch Neutroneneinfang zu produzieren;

**dadurch gekennzeichnet, dass**

die Gesamtmasse der zweiten Vielzahl von Kernen größer als ungefähr 1 Kilogramm ist, und die Vorrichtung (300) weiterhin eine Temperatursteuerung beinhaltet, die so konfiguriert ist, dass sie mindestens zwei unterschiedliche Bereiche der Vorrichtung auf unterschiedlichen Temperaturen hält, wobei mindestens ein Bereich so angepasst ist, dass er auf eine Temperatur unter etwa 250 Grad Kelvin gekühlt wird.

2. Vorrichtung (300) gemäß Anspruch 1, wobei die zweite Vielzahl von Kernen (326) Kerne von Atomen beinhaltet, die aus einer Gruppe ausgewählt sind, die aus Deuterium, Tritium, Helium-4, Lithium-7, Beryllium, Bor-11, Kohlenstoff, Stickstoff-15, Sauerstoff, Fluor, Neon-20 und Neon-22 besteht.

3. Vorrichtung (300) gemäß Anspruch 1, wobei bei Verwendung der mindestens eine Bereich auf eine Temperatur unter etwa 30 Grad Kelvin gekühlt wird.

4. Vorrichtung (300) gemäß Anspruch 1 oder 3, wobei die Temperatursteuerung die Verwendung eines kryogenen Fluids beinhaltet.

5. Vorrichtung (300) gemäß Anspruch 2, die ferner mindestens einen Neutronenreflektor beinhaltet, der die erste (322) und zweite (326) Vielzahl von Kernen mindestens teilweise umgibt, wobei der Reflektor Kerne der zweiten Vielzahl von Kernen (3226) beinhaltet und wobei die Reflektordicke größer als etwa 20 Zentimeter und kleiner als etwa 15 Meter ist.

6. Vorrichtung (300) gemäß Anspruch 2, die ferner sowohl einen äußeren als auch einen inneren Neutronenreflektor beinhaltet, die so konfiguriert sind, dass sie Neutronen in Richtung von Bereichen der Vielzahlen reflektieren, die höhere Dichten von Reaktantenkernen enthalten.

7. Vorrichtung (300) gemäß Anspruch 1, die ferner ein Target (804) beinhaltet, das so konfiguriert ist, dass es Neutronen (806) emittiert, wenn es von beschleunigten Partikeln getroffen wird, wobei sich das Target (804) aus Atomen zusammensetzt, die aus einer Gruppe ausgewählt sind, die aus Deuterium, Tritium, Helium-4, Lithium-7, Beryllium, Bor-11, Kohlenstoff, Stickstoff-15, Sauerstoff, Fluor, Neon-20, Neon-22, Tantal, Wolfram, Blei, Quecksilber, Thallium, Thorium, Uran, Neptunium und anderen Transuranen besteht; und

wobei die beschleunigten Partikel in das System über einen Zugangskanal (732) eintreten, der so konfiguriert ist, dass er mehr als 50 Prozent der beschleunigten Partikel, die auf den Zugangskanal (732) auftreffen, aufnehmen kann.

8. Ein Verfahren zum Produzieren von Zerfallsproduktkernen aus einem Reaktantenisotop unter Verwendung einer Neutronenquelle (316), wobei das Verfahren Folgendes beinhaltet:

Erzeugen von Neutronen;
Herstellen einer ersten Vielzahl von Reaktantenkernen (322), die einen ersten durchschnittlichen mikroskopischen thermischen Neutroneneinfangquerschnitt aufweisen;
Herstellen einer Sammlung von Isotopen, die aus denjenigen Isotopen besteht, deren Kernarten mindestens 1 % aller von einer Neutronenquelle (316) emittierten Neutronen einfangen und die keine Reaktantenkerne sind;
Herstellen einer zweiten Vielzahl von Kernen (326), die aus allen Kernen aus der Sammlung von Isotopen besteht, wobei mindestens etwa 90 % der Kerne mikroskopische thermische Neutroneneinfangquerschnitte aufweisen, die kleiner sind als der mikroskopische thermische Neutroneneinfangquerschnitt eines jeglichen der Reaktantenkerne, und
wobei die Gesamtmasse der zweiten Vielzahl von Kernen größer als etwa 1 Kilogramm ist; und
Bestrahlen der Vielzahl mit den Neutronen, sodass ein Reaktionsprodukt erzeugt wird, wenn die Neutronen von den Reaktantenkernen eingefangen werden; und
Extrahieren eines Zerfallsprodukts, das durch radioaktiven Zerfall des Reaktionsproduktisotops erzeugt wird, aus der Vielzahl;
wobei das Verfahren ferner die Verwendung einer Temperatursteuerung beinhaltet, die in der Lage ist, mindestens 2 unterschiedliche Bereiche der Vorrichtung auf unterschiedlichen Temperaturen zu halten, wobei mindestens ein Bereich auf eine Temperatur unter 250 Grad Kelvin gekühlt wird.

9. Verfahren gemäß Anspruch 8, wobei die Neutronen durch einen Kernreaktor oder eine unterkritische Anordnung erzeugt werden.

10. Verfahren gemäß Anspruch 8, wobei die Neutronen von einer Quelle erzeugt werden, die weder ein Reaktor noch eine unterkritische Anordnung ist.

11. Verfahren gemäß Anspruch 8, wobei die zweite Vielzahl von Kernen (326) Kerne von Atomen beinhaltet, die aus einer Gruppe ausgewählt sind, die aus Deuterium, Tritium, Helium-4, Lithium-7, Beryllium, Bor-11, Kohlenstoff, Stickstoff-15, Sauerstoff, Fluor, Neon-20 und Neon-22 besteht.

12. Verfahren gemäß Anspruch 11, das ferner mindestens das teilweise Umgeben der ersten (322) und zweiten (326) Vielzahl von Kernen mit mindestens einem Neutronenreflektor beinhaltet, der Kerne der zweiten Vielzahl von Kernen (326) beinhaltet und dessen Dicke größer als etwa 20 Zentimeter und kleiner als etwa 15 Meter ist.

13. Verfahren gemäß Anspruch 11, das ferner sowohl einen äußeren als auch einen inneren Neutronenreflektor beinhaltet, die Neutronen in Richtung von Bereichen reflektieren, die höhere Dichten von Reaktantenkernen enthalten.

14. Verfahren gemäß Anspruch 8, wobei der mindestens eine Bereich auf eine Temperatur unter 30 Grad Kelvin gekühlt wird.

15. Verfahren gemäß Anspruch 8 oder 14, wobei die Temperatursteuerung die Verwendung eines kryogenen Fluids beinhaltet.

16. Verfahren gemäß Anspruch 8, das ferner das Konfigurieren eines Targets (804) beinhaltet, sodass es Neutronen (806) emittiert, wenn es von beschleunigten Partikeln getroffen wird, wobei sich das Target (804) aus Atomen zusammensetzt, die aus einer Gruppe ausgewählt sind, die aus Deuterium, Tritium, Helium-4, Lithium-7, Beryllium, Bor-11, Kohlenstoff, Stickstoff-15, Sauerstoff, Fluor, Neon-20, Neon-22, Tantal, Wolfram, Blei, Quecksilber, Thallium, Thorium, Uran, Neptunium und anderen Transuranen besteht, und
wobei die beschleunigten Partikel in das System über einen Zugangskanal (732) eintreten, der so konfiguriert ist, dass er mehr als 50 Prozent der beschleunigten Partikel, die auf den Zugangskanal (732) auftreffen, aufnehmen kann.

17. Vorrichtung gemäß Anspruch 1, wobei die Neutronenquelle (316) weder ein Kernreaktor noch eine unterkritische Anordnung ist.

18. Verfahren gemäß Anspruch 8, das ferner Folgendes beinhaltet:
Extrahieren eines Zerfallsprodukts, das durch radioaktiven Zerfall des Reaktionsproduktisotops erzeugt wird, aus der Vielzahl.

**Revendications**

1. Un appareil (300) pour la production de noyaux-produits de réaction (324) à partir de noyaux réactifs (322), l'appareil (300) comprenant :

une source de neutrons (316) ;
une première pluralité de noyaux réactifs (322) ayant une première section efficace microscopique moyenne de capture de neutrons thermiques ;
une collection d'isotopes constituée des isotopes dont les espèces de noyaux capturent au moins 1 % de l'ensemble des neutrons émis à partir d'une source de neutrons et qui ne sont pas des noyaux réactifs ;
une deuxième pluralité de noyaux (326) constituée de l'ensemble des noyaux de la collection d'isotopes, où au moins approximativement 90 % des noyaux ont des sections efficaces microscopiques de capture de neutrons thermiques qui sont inférieures à la section efficace microscopique de capture de neutrons thermiques de n'importe lequel des noyaux réactifs ;
où la source de neutrons (316) est dans une proximité suffisante avec les noyaux réactifs pour produire des noyaux-produits de réaction par capture de neutrons ;
**caractérisé par le fait que**
la masse totale de la deuxième pluralité de noyaux est supérieure à approximativement 1 kilogramme, et l'appareil (300) comprend en outre une régulation de température configurée pour maintenir au moins deux régions différentes de l'appareil à des températures différentes, où au moins une région est prévue pour être refroidie jusqu'à une température au-dessous d'approximativement 250 degrés Kelvin.

2. L'appareil (300) de la revendication 1, où la deuxième pluralité de noyaux (326) comprend des noyaux d'atomes qui sont choisis dans un groupe constitué du deutérium, du tritium, de l'hélium-4, du lithium-7, du béryllium, du bore-11, du carbone, de l'azote-15, de l'oxygène, du fluor, du néon-20 et du néon-22.

3. L'appareil (300) de la revendication 1, où, lors de l'utilisation, l'au moins une région est refroidie jusqu'à une température au-dessous d'approximativement 30 degrés Kelvin.

4. L'appareil (300) des revendications 1 ou 3, où la régulation de température comprend l'utilisation d'un fluide cryogénique.

5. L'appareil (300) de la revendication 2, comprenant en outre au moins un réflecteur de neutrons entourant au moins partiellement la première (322) et la deuxième (326) pluralité de noyaux, où le réflecteur comprend des noyaux de la deuxième pluralité de noyaux (3226) et où l'épaisseur du réflecteur est supérieure à approximativement 20 centimètres et inférieure à approximativement 15 mètres.

6. L'appareil (300) de la revendication 2, comprenant en outre à la fois un réflecteur de neutrons externe et un réflecteur de neutrons interne configurés pour réfléchir des neutrons en direction de régions des pluralités contenant des densités plus élevées de noyaux réactifs.

7. L'appareil (300) de la revendication 1, comprenant en outre une cible (804) configurée pour émettre des neutrons (806) lorsqu'elle est impactée par des particules accélérées, où la cible (804) est composée d'atomes choisis dans un groupe constitué du deutérium, du tritium, de l'hélium-4, du lithium-7, du béryllium, du bore-11, du carbone, de l'azote-15, de l'oxygène, du fluor, du néon-20, du néon-22, du tantale, du tungstène, du plomb, du mercure, du thallium, du thorium, de l'uranium, du neptunium et d'autres transuraniens ; et
où les particules accélérées entrent dans le système via une voie d'accès (732) configurée pour accepter plus de 50 pour cent des particules accélérées qui viennent frapper la voie d'accès (732).

8. Un procédé pour la production de noyaux-produits de désintégration à partir d'un isotope réactif à l'aide d'une source de neutrons (316), le procédé comprenant :

la génération de neutrons ;
la préparation d'une première pluralité de noyaux réactifs (322) ayant une première section efficace microscopique moyenne de capture de neutrons thermiques ;
la préparation d'une collection d'isotopes constituée des isotopes dont les espèces de noyaux capturent au moins 1 % de l'ensemble des neutrons émis à partir d'une source de neutrons (316) et qui ne sont pas des noyaux réactifs ;
la préparation d'une deuxième pluralité de noyaux (326) constituée de l'ensemble des noyaux de la collection d'isotopes, où au moins approximativement 90 % des noyaux ont des sections efficaces microscopiques de capture de neutrons thermiques qui sont inférieures à la section efficace microscopique de capture de neutrons thermiques de n'importe lequel des noyaux réactifs, et
où la masse totale de la deuxième pluralité de noyaux est supérieure à approximativement 1 kilogramme ; et
l'irradiation de la pluralité avec les neutrons de sorte qu'un produit de réaction est généré lorsque les neutrons sont capturés par les noyaux réactifs ; et
l'extraction, à partir de la pluralité, d'un produit de désintégration qui est généré par désintégration radioactive de l'isotope de produit de réaction ;
le procédé comprenant en outre l'utilisation d'une régulation de température capable de maintenir au moins 2 régions différentes de l'appareil à des températures différentes, où au moins une région est refroidie jusqu'à une température au-dessous de 250 degrés Kelvin.

9. Le procédé de la revendication 8, où les neutrons sont générés par un réacteur nucléaire ou un assemblage sous-critique.

10. Le procédé de la revendication 8, où les neutrons sont générés par une source qui n'est ni un réacteur ni un assemblage sous-critique.

**11.** Le procédé de la revendication 8, où la deuxième pluralité de noyaux (326) comprend des noyaux d'atomes qui sont choisis dans un groupe constitué du deutérium, du tritium, de l'hélium-4, du lithium-7, du béryllium, du bore-11, du carbone, de l'azote-15, de l'oxygène, du fluor, du néon-20 et du néon-22.

**12.** Le procédé de la revendication 11, comprenant en outre le fait d'entourer au moins partiellement la première (322) et la deuxième (326) pluralité de noyaux avec au moins un réflecteur de neutrons comprenant des noyaux de la deuxième pluralité de noyaux (326) et dont l'épaisseur est supérieure à approximativement 20 centimètres et inférieure à approximativement 15 mètres.

**13.** Le procédé de la revendication 11, comprenant en outre à la fois un réflecteur de neutrons externe et un réflecteur de neutrons interne qui réfléchissent des neutrons en direction de régions contenant des densités plus élevées de noyaux réactifs.

**14.** Le procédé de la revendication 8, où l'au moins une région est refroidie jusqu'à une température au-dessous de 30 degrés Kelvin.

**15.** Le procédé des revendications 8 ou 14, où la régulation de température comprend l'utilisation d'un fluide cryogénique.

**16.** Le procédé de la revendication 8, comprenant en outre la configuration d'une cible (804) afin qu'elle émette des neutrons (806) lorsqu'elle est impactée par des particules accélérées, où la cible (804) est composée d'atomes choisis dans un groupe constitué du deutérium, du tritium, de l'hélium-4, du lithium-7, du béryllium, du bore-11, du carbone, de l'azote-15, de l'oxygène, du fluor, du néon-20, du néon-22, du tantale, du tungstène, du plomb, du mercure, du thallium, du thorium, de l'uranium, du neptunium et d'autre transuraniens, et
où les particules accélérées entrent dans le système via une voie d'accès (732) configurée pour accepter plus de 50 pour cent des particules accélérées qui viennent frapper la voie d'accès (732).

**17.** L'appareil selon la revendication 1, où la source de neutrons (316) n'est ni un réacteur nucléaire ni un assemblage sous-critique.

**18.** Le procédé de la revendication 8 comprenant en outre :
l'extraction, à partir de la pluralité, d'un produit de désintégration qui est généré par la désintégration radioactive de l'isotope de produit de réaction.

FIG. 1 *Prior Art*

FIG. 2 *Prior Art*

**FIG. 3**

EP 3 629 342 B1

FIG. 4

FIG. 5

FIG. 6

**FIG. 7**

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62033691
- US 2013336437 A1

- EP 0990238 A1